# EUROPEAN PATENT SPECIFICATION

(11) **EP 1 928 788 B1**
(45) Date of publication and mention of the grant of the patent: **07.03.2012**
(21) Application number: 06798661.2
(22) Date of filing: 05.09.2006
(51) Int. Cl.: C01G 55/00

(54) **METHOD FOR PREPARING METAL OXIDE CONTAINING PRECIOUS METALS**
VERFAHREN ZUR HERSTELLUNG VON EDELMETALLE ENTHALTENDEM METALLOXID
PROCEDE DE PREPARATION D'OXYDE DE METAL CONTENANT DES METAUX PRECIEUX

(30) Priority: 08.09.2005 KR 20050083802
(43) Date of publication of application: 11.06.2008
(73) Proprietor: HANWHA CHEMICAL CORPORATION, Seoul 100-797 (KR)
(72) Inventor: MYEONG, Wan-Jae, Yuseong-gu Daejeon, 305-509 (KR); LEE, Joo-Hyeong, Daejeon, 305-721 (KR); SONG, Kyu-Ho, Daejeon, 302-777 (KR); HAHN, Young Sik, Daejeon, 305-761 (KR)
(74) Representative: Lins, Martina
(86) International application number: PCT/KR2006/003516
(87) International publication number: WO 2007/029957

(56) References cited:
- WO-A1-2004/007350
- WO-A1-2004/103907
- WO-A2-2005/023728
- FR-A1- 2 852 591
- US-A- 4 743 576
- US-A- 5 993 762
- US-A- 6 001 768

## Description

### Technical Field

The present invention relates to a method for preparing a metal oxide containing precious metals, which can be used for a catalyst for purifying automobile exhaust gases and has excellent heat resistance and, more particularly, to a method for preparing a metal oxide containing precious metals, which has high-temperature heat resistance for an oxygen storage characteristic superior to that of a conventional metal oxide, and high-temperature volatility of precious metals lower than that of the conventional metal oxide, thereby realizing excellent heat resistance.

### Background Art

A metal oxide of the present invention can be used as an Oxygen Storage Capacity (OSC) material of a three-way catalyst used in purifying automobile exhaust gases, or a precious metal catalyst, and can be used for the purification of exhaust gases exhausted from a diesel automobile, chemical reactions, an oxygen sensor, a fuel cell and the like. The most .. promising field for the metal oxide of the present invention is a field in which the metal oxide is used as an oxygen storage capacity material in a three-way catalyst used in purifying exhaust gases exhausted from a gasoline automobile.

The three-way catalyst serves to convert carbon monoxide (CO), hydrocarbons and nitrogen oxide (NOₓ) into materials having low environmental hazardousness and toxicity such as carbon dioxide, water, nitrogen and the like, by oxidizing and reducing the same: The three-way catalyst is fabricated by washcoating precious metals such as platinum (Pt), palladium (Pd), rhodium (Rh) and the like, alumina and an oxygen storage capacity material on a porous honeycomb.

The three-way catalyst has a problem in that the conversion ratio of carbon monoxide, hydrocarbons and nitrogen oxide and the like is excellent in an extremely narrow region around an air/fuel ratio of about 14.6, however the conversion ratio thereof decreases when deviating from the region around the above air/fuel ratio.

Cerium, which is used as an oxygen storage capacity material, is easily converted into cerium (III) and cerium (IV), and thus has excellent properties for storing oxygen in a fuel lean region and discharging the oxygen in a fuel rich region.

Fuel lean: Ce(III)₂O₃ + 1/2O₂ --- Ce(IV)O₂ (1)

Fuel rich: Ce(IV)O₂ Ce(III)₂O₃ + 1/2O₂ (2)

Therefore, when the cerium and the three-way catalyst are simultaneously used, the problem of a rapid decrease in the conversion ratio in response to minute fluctuations in the air/fuel ratio can be alleviated.

The three-way catalyst for purifying automobile exhaust gases is often to be exposed to high temperatures. In this case, attributable to fusion bonding of pores and sintering of crystals, the specific surface area of cerium oxide is rapidly decreased, the crystal size thereof is rapidly increased, and the oxygen storage ability and oxygen mobility thereof are decreased. Furthermore, owing to sintering process etc., the crystal size of a supported precious metal is increased, the dispersibility thereof is decreased, and the performance of the catalyst is decreased because the supported precious metal is buried in the cerium oxide, or the area of the contact surface between the cerium oxide and the precious metal is decreased. '

Various attempts to solve the degradation of such a three-way catalyst at high temperatures have been made.

First, an attempt to increase the heat resistance of cerium oxide has been made.

When zirconium oxide is mixed with cerium oxide, it is known that the heat resistance of the mixed oxide is increased, and the oxygen storage capacity or discharge characteristics thereof are increased. When other components are added to the mixture of the cerium oxide and the zirconium oxide, it is known that the heat resistance and oxygen storage capacity of the mixed oxide are further increased, and the performances of mixed oxides thereof are different in accordance with the synthesis method and composition of them.

Korean Patent No. 10-0313409 discloses a composition based on cerium oxide and on zirconium oxide and, optionally, on a yttrium, scandium or rare-earth metal oxide. The cerium/zirconium atomic proportion is at least 1. The compound exhibits a specific surface, after calcination for 6 hours at 900° C. of at least 35 m²/g. The composition is prepared buy mixing, in a liquid medium, a cerium compound, a zirconium compound and, if appropriate, a yttrium, scandium or rare-earth metal compound; heating and calcining the precipitate obtained. However, the size of the crystallite becomes too large, because the precipitate should be calcined at a high temperature in order to increase the crystallinity thereof.

Meanwhile, US Patent No. 5,908,800, in order to produce a single cubic shaped solid solution other than a simple mixed oxide, discloses a process for preparing a mixed cerium and zirconium oxide, comprising the steps of: preparing a liquid mixture containing trivalent cerium and zirconium compounds; placing the mixture in contact with carbonate or bicarbonate, thus forming a reactive medium exhibiting a neutral or basic pH during the reaction; collecting a precipitate including a compound including cerium carbonate; and calcining the precipitate. In the oxide prepared according to the process, after calcination for six hours at 800°C the specific surface area thereof is at least 20m²/g, however, it is difficult to consider that the specific surface area is still kept sufficiently large at the time of high temperature exposure.

Japanese Patent No. 3341973 discloses a process for producing a solid solution of cerium oxide, zirconium oxide, and, if necessary, at least one oxide of one element selected from the group consisting of alkaline-earth metals and rare-earth elements other than cerium. By increasing the degree of dissolution of a mixture to 70% or more, preferably 90% or more, the oxygen storage capacity is increased, the average diameter of the crystallite is less than 100nm, and preferably less than 12nm, and the specific surface area is 20m²/g or more, and preferable 50m²/g or more. The solid solution is produced throne the following steps: a first step of obtaining a precipitate by adding a surfactant and an alkaline substance, or hydrogen peroxide to an aqueous solution of cerium compound and zirconium compound, and a second step of obtaining solid solution particles of oxides by heating the precipitate at a temperature of 250°C and rapidly dissolving the zirconium in the cerium, oxide. In the solid solution disclosed in example 19, the synthesized particles have the specific surface area of 80m²/g and the average crystallite diameter of 6nm, and when this particle is heat-treated for five hours at a temperature of 300 to 1200°C, the specific surface area is decreased to 5m²/g or less, and the average diameter of the crystallite is increased to about 22nm. Therefore, it is difficult to consider that the heat resistance is sufficient.

WO 2004/103907 A1 discloses a method for preparing a metal oxide solid solution in nano size, The metal oxide solid solution is prepared by reacting a reactant mixture containing water and at least two water-soluble metal compounds at 200 to 700°C under a pressure of 180 to 550 bar in a continuous manner, wherein the reactant mixture contains the metal compounds at an amount of 0.01 to 30 % by weight in total and the solid solution has a crystallite size of I to 1.000 nm. The metal oxide solid solution is suitable as a UV light shielding agent or as an oxygen storage component. Examples for these solid solutions are i.a. zirconia containing yttrium oxide, zinc containing cerium oxide, ceria containing zinc oxide, ceria containing zirconium oxide.

Second, a method of preventing the catalyst from being degraded at high temperature is achieved by changing the interaction between a supported precious metal and a supporting substrates. It is known that rhodium among precious metals reacts with alumina in a fuel lean condition at high temperature, and thus easily forms an inactive rhodium-aluminum compound (Rh-aluminate). Since the rhodium serves to purify exhaust gases by reducing NOₓ, the purification capacity of nitrogen oxide is greatly decreased. One of the methods of preventing the decrease in purification capacity is to use ceria as a supporting substrate. However, it is known that ceria-supported rhodium accelerates the reduction of oxygen on the surface of ceria but inhibits the mobility of oxygen in ceria bulk. To increase the utilization of oxygen of ceria bulk, the method for producing a solid solution of oxides by adding second ion components such as Zr, Gd, Pr, Tb and Pb to the ceria is used.

Muraki supported rhodium onto ceria and ceria-zirconia respectively by incipient wetness method, and then compared the degradation characteristics (Catal. Today, 63(2000), 337-345). He emphasizes that when the rhodium is supported to the ceria-zirconia mixed oxides, oxygen of the ceria bulk can be utilized at high temperatures.

Bernal et al, supported precious metals such as Pt and Rh onto a mixed metal oxides of ceria, wherein, Zr, Tb are dissolved, and then investigated the size of supported Pt and Rh

particles with increasing the temperature to 900°C. Catalysis by Ceria and Related Materials, Eds. A. Trovarelli, Chapter 3, p. 126). It is reported that the size of Pt increased about three to four times, and that the size of Rh increased about two times at a temperature of 900°C, compared to a temperature of 350°C.

Thus, a method of preventing precious metals from being degraded at high temperature is further required.

US Patent No. 6,787,500B2 discloses a method of producing catalyst particles through the following steps: coating PtO₂ ultra-fine particles on CeO₂ by a method of evaporating two or more kinds of precursor solution in a vacuum; and coating metal oxide, having a high melting point, between the PtO₂ ultra-fine particles so as to prevent the coated PtO₂ particles from being sintered at high temperatures. However, since a vacuum apparatus is used in this method, it is not convenient for producing large quantity.

### Disclosure

### Technical Problem

As described in the above prior art, conventional ceria or ceria mixed oxides have problems at high temperature in that the specific surface area is largely decreased due to fusion bonding of pores or sintering of crystals, and catalytic properties are decreased largely because supported precious metals are buried and volatilized. However, ceria or ceria mixed oxides, each of which is an oxygen storage capacity material is necessarily exposed to high temperature when used as a three-way catalyst. At the early stage in the development of a three-way catalyst for automobiles, Ir and Ru were abandoned even though they have high performamce of Nox treatment and are inexpensive, since they have a problem in that metal oxides thereof are volatile at high temperatures (H. S. Gandi, G.W. Graham and R. W. McCabe, Journal of Catalysis, 216(2003), pp.433-442).

If techniques capable of solving and alleviating these problems can be developed, these precious metals, which have high performance and are inexpensive, could be put to use.

The present inventors have thoroughtly studied techniques capable of minimizing the performance degradation of precious metals for a catalyst for purifying, automobile exhaust gases when exposed to high temperature. As a result, we developed metal oxides containing precious metals with excellent heat resistance by keeping the precious materials in a crystal lattice as a kind of solid solution, thus preventing fusion bonding of pores and sintering of crystals of the metal oxides, as well as preventing sintering or volatilizing of the precious materials contained in the metal oxides.

Accordingly, an object of the present invention is to provide a method for preparing a metal oxide containing precious metals, which can be used for a catalyst for purifying automobile exhaust gases and has excellent heat resistance.

### Technical Solution

In order to accomplish the above object, the present invention provides a method for preparing a metal oxide containing precious metals, including the step of continuously reacting a reaction mixture, including (i) water, (ii) a water-soluble precious metal compounds, (iii) a water-solubls cerium compound and (iv) at least one water-soluble metal compound selected from the group consisting of a zirconium compound, a scandium compound; a yttrium compound and a lanthanide metal compound other than a cerium compound, at a temperature of 200°C to 700°C and at a pressure of 180 bar to 550 bar, wherein the mole ratio of precious metal to metal other than the precious metal in the reaction product is in the range from 0,001 to 0.1, wherein the prepared metal compound exists in the form of a solid solution and wherein the water-soluble precious metal compound is at least one kind of precious metal compound selected from the group consisting of Rh and Ir.

Preferably, the water-soluble cerium compound is not particularly limited, as long as it is water-soluble. Such as a nitrate, a sulfate, a chloride, an oxalate or a citrate are preferable. More preferably water-soluble cerium compound is a nitrate, an oxalate or a citrate.

One of water-soluble metal compounds selected from the group consisting of a zirconium compound, a scandium compound, a yttrium compound and a lanthanide metal compound other than a cerium compound is not particularly limited, as long as it is water-soluble. Such as a nitrate, a sulfate, a chloride, an oxalate or a citrate are preferable. More preferably, the water-soluble cerium compound is a nitrate, an oxalate or a citrate.

Here, it is preferable that the lanthanide metal compound other than the cerium compound be Pr, Nd, Sm, Tb.

Preferably, an alkaline solution or acidic solution having a mole ratio of 0.1 to 20 moles per mole of the metal compound of (ii), (iii) and (iv) is added to the reaction mixture before or during the reaction.

Preferably, the alkaline solution is ammonia water.

Preferably, the method further includes at least one aftertreatment process for separation, drying or calcination of the synthesized metal oxide.

The form of metal oxide is a solid solution.

According to the present invention, an oxygen storage capacity material including a metal oxide prepared by the method is provided.

According to the present invention, a catalyst system including a metal oxide prepared by the method is provided.

### Advantageous Effects

According to the present invention, a metal oxide containing precious metals, which has high-temperature heat resistance for an oxygen storage characteristic superior to that of a conventional metal oxide, and high-temperature volatility of precious metals lower than that of the conventional metal oxide, can be obtained. This is attributable to the fact that the form of mixed oxides for oxygen storage capacity material is a solid solution of oxides containing ceria and zirconia and simultaneously, the precious metal is mixed as a kind of solid solution, by the process disclosed in the present invention. Such an oxygen storage capacity material has excellent heat resistance, and thus is low in pore fusion bonding or crystal growth, and the dissolved precious metal is captured in a crystal lattice containing cerium, thus the precious metal oxide is maintained stable even when exposed to high temperatures.

### Description of Drawings

FIG. 1 is a TPR (Temperature Programmed Reduction) curve of a dried sample of an oxygen storage capacity material containing precious metals prepared based on example 1 and comparative example 1;
FIG. 2 is a TPR (Temperature Programmed Reduction) curve of a calcined sample of an oxygen storage capacity material containing precious metals prepared based on example 1 and comparative example 1;
FIG. 3 is a TPR (Temperature Programmed Reduction) curve of a dried sample of an oxygen material containing precious metals prepared based on examples 1, 2 and 3 and comparative example 2; and
FIG. 4 is a TPR (Temperature Programmed Reduction) curve of a calcined sample of an oxygen storage capacity material containing precious metals prepared based on examples 1, 2 and 3 and comparative example 2.

### Best Mode

Hereinafter, the present invention will be more specifically described below.

According to the present invention, a metal oxide is prepared by continuously reacting a reaction mixture, including (i) water, (ii) a water-soluble precious metal compounds, (iii) a water-soluble cerium compound and (iv) at least one of water-soluble metal compounds selected from the group consisting of a zirconium compound, a scandium compound, a yttrium compound and a lanthanide metal compound other than a cerium compound, at a temperature from 200°C to 700°C and at a pressure from 180 bar to 550 bar. Here, if the reaction temperature is below 200°C or the reaction pressure is below 180 bar, the reaction rate is low and the solubility of the resultant oxides is high, thus the degree of recovery into a precipitate is lowered. Further, if the reaction temperature and the reaction pressure are too high, the economic efficiency is decreased.

According to the present invention, the molar ratio of precious metal to metal other than the precious metal in a reaction product is in the range from 0.001 to 0.1. If the molar ratio is below 0.001, it is too low to be effective as a catalyst. Further, if the molar ratio is above 0.1, the cost is too high to be economically meaningful.

According to the present invention, an alkaline solution or an acidic solution having a molar ratio of 0.1 to 20 moles per mole of the metal compound may be added to the reaction mixture before or during the reaction. If the molar ratio is below 0.1, it is insufficient to serve as a precipitant. If the molar ratio is above 20, the amount of unreacted solution is too high to be economically meaningful.

Here, it is most preferable that the alkaline solution be ammonia water.

Microwaves or ultrasonic waves can be radiated to increase the mixing or reaction efficiency during mixing and reaction

According to the present invention, a method for synthesizing crystalline metal oxides includes: forming a precipitates through hydrolysis by adding an alkaline solution (ammonia water) to an aqueous mixed solution, in which precious metal compound, cerium compound and at least one of water-soluble metal compounds selected from the group consisting of zirconium compounds, scandium compounds, yttrium compounds and lanthanide metal compounds other than cerium compound are dissolved with water, in a a continuous tube mixer; synthesizing a crystalline metal oxide through hydration or oxidation by adding sub-critical or supercritical water at a temperature range from 200°C to 700°C and at a pressure range from 180 bar to 550 bar thereto.

Preferably, a process for separating, drying or calcining the reaction products may be added. The conventional separation process can be performed such as a microfiltration after cooling the reaction products to a temperature not above than 100°C. The conventional drying process such as spray drying, a convection drying, or a fluidized-bed drying can be performed at a temperature of, for example, not above than 300°C. When it is necessary to increase the size of the dried particles or crystals or to sinter them, the reaction products are calcined in oxidation or reduction atmosphere or in the presence of water at a temperature range from 400°C to 1200°C. If the temperature is below than 400°C, the calcination effect is low. If the temperature is above than 1200°C, the product is not suitable for use as a catalyst etc. due to excessive sintering.

The synthesized metal oxide using the present method has a spherical or an octahedral shape, and has an average crystal size ranging from 1 nm to 10 nm. Smaller crystals are advantageous when is is used as a catalyst. The size of crystals depends on the size of crystallite. Usually, at high temperatures, the size of the crystallite is increased gradually, and the performance thereof is gradually decreased, so that it is preferable of the crystallite size to be maintained as small as possible.

Crystallite size of the metal oxide prepared by the present invention is maintained at a maximum of 20 nm even when they are calcined at a temperature of 1000°C for six hours in air.

In the case in which 0.2 weight% of rhodium is dissolved in the metal oxide, as described in example 1 in the present invention, the hydrogen consumption temperature of the dried particle is 130°C or less, and the heat resistance thereof is excellent because a relatively low hydrogen consumption temperature is maintained even after the metal oxide is calcined at a temperature of 1000°C for six hours in air.

### Mode for Invention

Hereinafter, the present invention will be described through the following examples, but are not limited thereto.

### Example 1

To produce a metal oxide composition containing 0.2 weight% of rhodium, a mixed aqueous solution, including 9.97 weight% of cerium nitrate [Ce(NO₃)₃ · 6H₂O], 0.17 weight% of rhodium nitrate(aqueous solution containing 8 weight% of rhodium), 9.40 weight% of zirconyl nitrate [as ZrO₂, 30wt% of aqueous solution] and 1.46 weight% of lanthanum nitrate [La(NO₃)₃ · 6H₂O], was pumped at a rate of 8g per minute through a tube having an outer diameter of 1/4 inch, and was pressurized to a pressure of 250 bar. 15.59 weight% of ammonia water [containing 28wt% of NH₃] was pumped at a rate of 8g per minute through a tube having an outer diameter of 1/4 inch and, thus, was pressurized to a pressure of 250 bar. The pressurized mixed aqueous solution and the pressurized ammonia water were pumped to a tube-typed continuous line mixer, instantly mixed. The residence time in the mixer is about 30 seconds to allow precipitation. Deionized water was pumped at a rate of 96g per minute through a tube having an outer diameter of 1/4 inch, was pressurized to a pressure of 250 bar and preheated to a temperature of 550°C. The preheated deionized water and the precipitate produced in the line mixer were pumped to a continuous line reactor and instantly mixed to become a temperature of 400°C, and resided for one second to allow dehydration and oxidation reaction. The slurry produced alter the reaction was cooled and particles were separated from the slurry. The separated particles were dried in an oven at a temperature of 100°C. The dried particles were calcined in a furnace at a temperature of 1000°C for six hours.

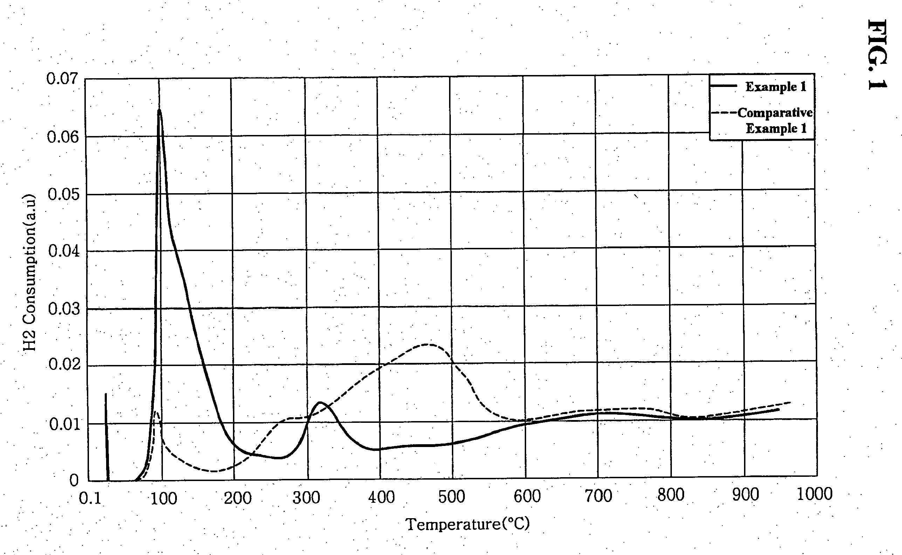

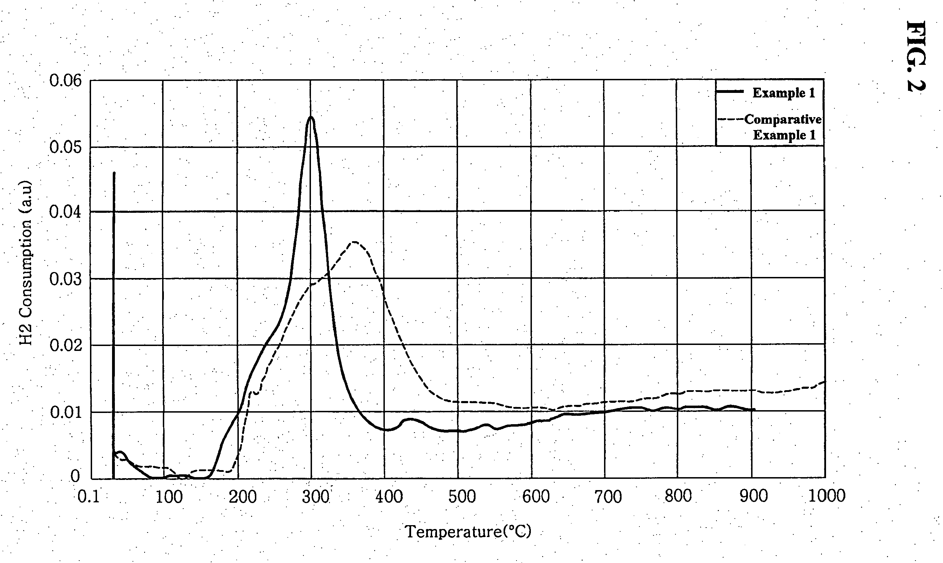

The specific surface area (BET) and crystallite size (XRD) of a dried sample and a calcined sample at a temperature of 1000°C were analyzed. The samples were first oxidated at a temperature of 400°C, and then the amount of consumption of hydrogen was monitored by a thermocouple detector (TCD) while mixed gases of hydrogen and argon were introduced and the temperature was increased at a rate of 10°C/min. The oxygen storage capacity and hydrogen consumption initiation temperature were measured, and are shown in FIGs. 1 and 2. The results of the above analysis are given in Table 1.

### Comparative example 1

The reaction was performed as in example 1 except that the rhodium nitrate was omitted. The slurry produced after the reaction was cooled and particles were separated from the slurry. The separated particles were dried in an oven at a temperature of 100°C. In order to load rhodium on the mixed oxides an impregnation method, which is a conventional precious metal supporting method, was applied to the dried particles. An aqueous rhodium solution was dropped in individual droplets to the dried particles to be the same ratio as example 1, and dried in an oven for 12 hours at a temperature of 100°C. The dried Rh-loaded particles were calcined in a furnace at a temperature of 1000°C for six hours.

The specific surface area (BET) and crystallite size (XRD) of a dried sample and a calcined sample at a temperature of 1000°C were analyzed. The samples were previously oxidated at a temperature of 400°C, and then the amount of hydrogen consumed was monitored using a thermocouple detector (TCD) while mixed gases of hydrogen and argon were introduced, and the temperature was increased at a rate of 10°C/min. The oxygen storage capacity and hydrogen consumption initiation temperature were measured, and are shown in FIGs. 1 and 2. The analysis results are given in Table 1, for comparison to example 1.

**Table 1**

| | Dried sample | | | Calcined sample | | |
|---|---|---|---|---|---|---|
| | Specific surface area (m²/g) | Crystallite size (nm) | TPR T(OSC)°C(mmol/g) | Specific surface area (m²/g) | Crystallite size (mn) | TPR T(OSC) °C(mmol/g) |
| Example 1 | 125 | 5.3 | 102(0.36), | 44 | 6.2 | 300(0.41) |
| | | | 317(0.04) | | | |
| Comparative example 1 | 110 | 5.4 | 96(0.02), | 40 | 6.4 | 370(0.43) |
| | | | 470(0.34) | | | |

In bare ceria on which precious metals are not supported, the hydrogen consumption temperature due to the reduction of bulk O₂ and surface O₂ appeared at a temperature of about 850°C and at a temperature of about 600°C respectively. However, in Rh-loaded ceria on which precious metals are supported, new peaks appeared at temperatures ranging from about 100°C to about 200°C. It is thought that this phenomenon occurred because the surface O₂ at a temperature of about 600°C is reduced at a much lower temperature by the supported metal (Alessandro Trovarelli ed., "Catalysis by Ceria Related Materials", Imperial College Press (2002), Chapter 4. pp. 85-168).

As described in example 1 and comparative example 1, the metal oxide of the present invention almost all of the hydrogen is consumed at a low temperature of about 100°C in the dried sample, and is consumed at a much lower temperature even in the calcined sample, compared to the sample in which rhodium is supported by the conventional impregnation method. This phenomenon occurred because in the metal oxides prepared according to the present invention, the precious metals are well dispersed, and, are almost not degraded by sintering even when exposed to high temperatures.

### Example 2

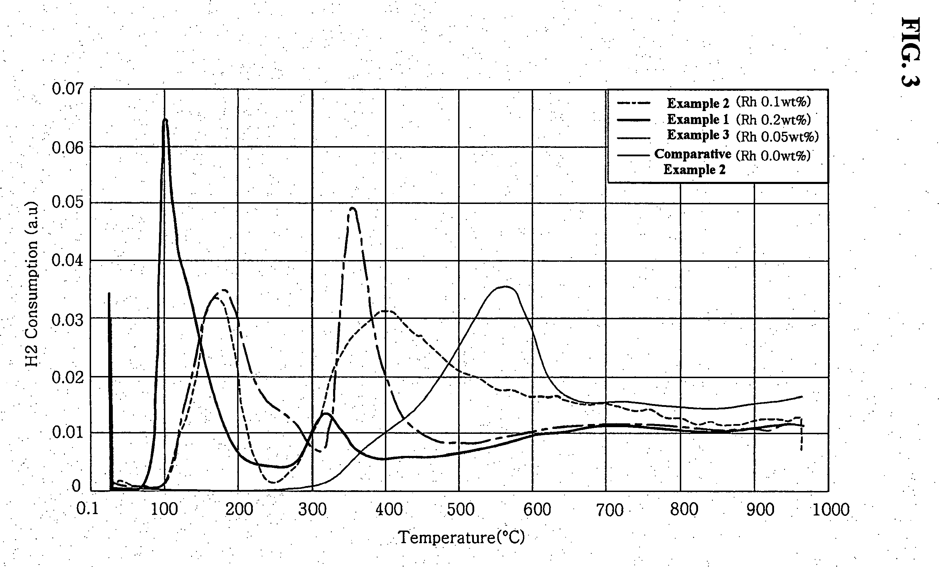

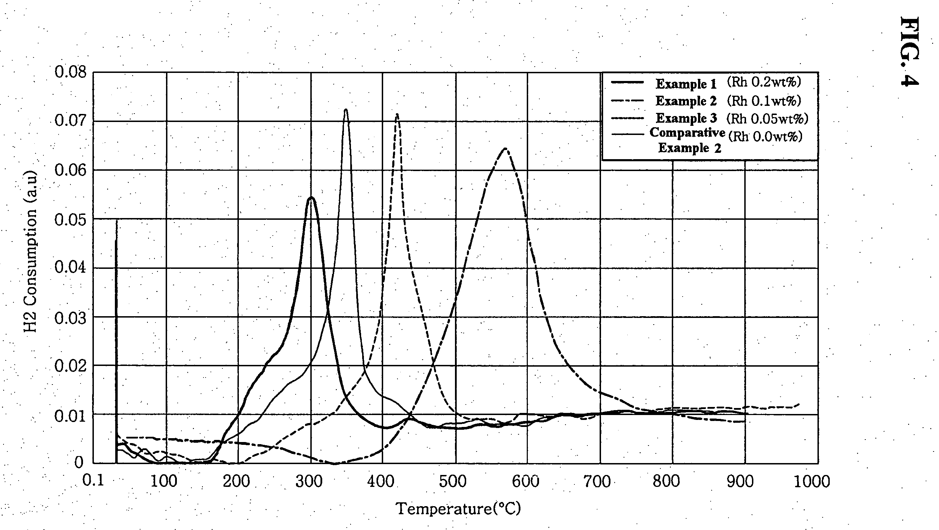

The reaction was performed using the same method as example 1 except that the rhodium content, compared to example 1, was decreased to 1/2 (Rh 0.1 weight%). Slurry produced after the reaction was cooled and particles were separated from the slurry. The separated particles were dried in an oven at a temperature of 100°C. The dried particles were calcined in a furnace at a temperature of 1000°C for six hours. The specific surface area (BET) and crystallite size (XRD) of a dried sample and a sample calcined at a temperature of 1000°C were analyzed. The samples were previously oxidated at a temperature of 400°C, and then the amount of hydrogen consumed was monitored using a thermocouple detector (TCD) while mixed gases of hydrogen and argon were introduced and the temperature was increased at a rate of 10°C/min. The oxygen storage capacity and hydrogen consumption initiation temperature were measured, and are shown in FIGs. 3 and 4. The analysis results are given in Table 2.

### Example 3

The reaction was performed using the same method as in example 1, except that the rhodium content, compared to example 1, was decreased to 1/4 (Rh 0.05 weight%). The slurry produced after the reaction was cooled, and particles were separated from the slurry. The separated particles were dried in an oven at a temperature of 100°C. The dried particles were calcined in a furnace at a temperature of 1000°C for six hours. The specific surface area (BET) and crystallite size (XRD) of a dried sample and a sample calcined at a temperature of 1000°C were analyzed. The samples were previously oxidated at a temperature of 400°C, and then the amount of hydrogen consumed was monitored using a thermocouple detector (TCD) while mixed gases of hydrogen and argon were introduced and the temperature was increased at a rate of 10°C/min. The oxygen storage capacity and hydrogen consumption initiation temperature were measured, and are shown in FIGs. 3 and 4. The analysis results are given in Table 2.

### Comparative example 2

The reaction was performed using the same method as in example 1, except that rhodium was excluded (0.0 weight% of Rh). The lurry produced after the reaction was cooled and particles were separated from the slurry. The separated particles were dried in an oven at a temperature of 100°C. The dried particles were calcined in a furnace at a temperature of 1000°C for six hours. The specific surface area (BET) and crystallite size (XRD) of a dried sample and a sample calcined at a temperature of 1000 °C were analyzed. The samples were previously oxidated at a temperature of 400°C, and then the amount of hydrogen consumed was monitored using a thermocouple detector (TCD) while mixed gases of hydrogen and argon were introduced and the temperature was increased at a rate of 10 °C/min. The oxygen storage capacity and hydrogen consumption initiation temperature were measured, and are shown in FIGs. 3 and 4. The analysis results are given in Table 2.

**Table 2**

| | Dried sample | | | Calcined sample | | |
|---|---|---|---|---|---|---|
| | Specific surface area (m²/g) | Crystallite size (nm) | TPR T(OSC)°C (mmol/g) | Specific surface area (m²/g) | Crystallite size (nm) | TPR T(OSC)°C (mmol/g) |
| Example 1 (Rh0.2) | 125 | 5.3 | 102(0.36), | 44 | 6.2 | 300(0.41) |
| | | | 317(0.04) | | | |
| Example 2 (Rh0.1) | 109 | 5.4 | 180(0.33), | 39 | 6.4 | 349(0.44) |
| | | | 355(0.24) | | | |
| Example 3 (Rh0.05) | 110 | 5.3 | 169(0.24), | 40 | 6.2 | 419(0.42) |
| | | | 373(0.52) | | | |
| Com. example 2 (Rh0.0) | 125 | 5.3 | 558(0.38) | 44 | 6.2 | 585(0.42) |

The lower is the rhodium content, the higher is the hydrogen consumption temperature around 150°C. However, the hydrogen consumption temperatures are very low compared to the case in which rhodium is not supported (comparative example 2).

### Example 4

An aqueous mixed solution, including 9.97 weight% of cerium nitrate, precious metal salt (aqueous solution containing rhodium nitrate), 9.40 weight% of zirconyl nitrate and 1.46 weight% of lanthanum nitrate, was pumped at a rate of 8g per minute through a tube having an outer diameter of 1/4 inch, and was pressurized to a pressure of 250 bar. The concentration of precious metal salt was determined such that the content of precious metal would be 0.5 weight% after synthesis. 15.59 weight% of ammonia water was pumped at a rate of 8g per minute through a tube having an outer diameter of 1/4 inch and thus was pressurized to a pressure of 250 bar. The pressurized aqueous mixed solution of cerium nitrate, precious metal salt, zirconyl nitrate and lanthanum nitrate and the pressurized ammonia water were pumped to a continuous line mixer, instantly mixed. The residence time in the mixer is about 30 seconds to allow precipitation. Deionized water was pumped at a rate of 96g per minute through a tube having an outer diameter of 1/4 inch, was pressurized to a pressure of 250 bar and preheated to a temperature of 550°C. The preheated deionized water and the precipitate produced in the line mixer were pumped to a continuous line reactor and instantly mixed to become a temperature of 400°C, and resided for one second to allow dehydration and oxidation reaction. The slurry produced after the reaction was cooled and particles were separated from the slurry. The separated particles were dried in an oven at a temperature of 100°C. The dried particles were calcined in a furnace at a temperature of 1000°C for 24 hours. The precious metals content of the dried particle and calcined particle was analyzed using an ICP-MS method, and the analysis results are given in Table 3.

### Example 5

An aqueous mixed solution, including 9.97 weight% of cerium nitrate, precious metal salt (aqueous solution containing iridium hydrochloride), 9.40 weight% of zirconyl nitrate and 1.46 weight% of lanthanum nitrate, was pumped at a rate of 8g per minute through a tube having an outer diameter of 1/4 inch, and was pressurized to a pressure of 250 bar. The concentration of precious metal salt was determined such that the content of precious metal would be 0.5 weight% after synthesis. 15.59 weight% of ammonia water was pumped at a rate of 8g per minute through a tube having an outer diameter of 1/4 inch, and thus was pressurized to a pressure of 250 bar. The pressurized aqueous mixed solution of cerium nitrate, precious metal salt, zirconyl nitrate and lanthanum nitrate and the pressurized ammonia water were pumped to a continuous line mixer, instantly mixed. The residence time in the mixer is about 30 seconds to allow precipitation. Deionized water was pumped at a rate of 96g per minute through a tube having an outer diameter of 1/4 inch, was pressurized to a pressure of 250 bar and preheated to a temperature of 550°C. The preheated deionized water and the precipitate produced in the line mixer were pumped to a continuous line reactor and instantly mixed to become a temperature of 400°C, and resided for one second to allow dehydration and oxidation reaction. The slurry produced after the reaction was cooled and particles were separated from the slurry. The separated particles were dried in an oven at a temperature of 100°C. The dried particles were calcined in a furnace at a temperature of 1000°C for 24 hours. The precious metal content of the dried particle and calcined particle was analyzed using an ICP-MS method, and the analysis results are given in Table 3.

### Comparative example 3

The reaction was performed as in example 4, except that the aqueous rhodium precious metal salt solution was omitted. Slurry produced after the reaction was cooled and particles were separated from the slurry. The separated particles were dried in an oven at a temperature of 100°C. In order to load rhodium on the mixed oxides an impregnation method, which is a conventional precious metal supporting method, was applied to the dried particles. An aqueous rhodium solution dropped in individual droplets to the dried particles to be the same ratio as example 4, and dried in an oven for 12 hours at a temperature of 100°C. The dried Rh-loaded particles were calcined in a furnace at a temperature of 1000°C for 24 hours. The precious metal content of the dried particle and calcined particle was analyzed using an ICP-MS method, and the analysis results are given in Table 3 for comparison with example 4. The remaining ratio of Rhodium precious metal of the present invention was 94.9%, and this remaining ratio was higher than that (93.0%) of the sample supported using a typical impregnation method. The remaining ratio was calculated using the equation: [precious metal weight of calcined sample]/ [precious metal weight of dried sample] x 100(%). It was understood that, in the present invention, this phenomenon occurred because volatility was suppressed since, the precious metal was dissolved in a lattice of a metal oxide of an oxygen storage capacity material.

### Comparative example 4

The reaction was performed as in example 5, except that the aqueous iridium precious metal salt solution was omitted. The slurry produced after the reaction was cooled, and particles were separated from the slurry. The separated particles were dried in an oven at a temperature of 100°C. In order to load iridium on the mixed oxides an impregnation method, which is a conventional precious metal supporting method, was applied to the dried particles. An aqueous iridium solution dropped in individual droplets to the dried particles to be the same ratio as example 5, and dried in an oven for 12 hours at a temperature of 100°C. The dried Ir-loaded particles were calcined in a furnace at a temperature of 1000°C for 24 hours. The precious metal content of the dried particle and calcined particle was analyzed using an ICP-MS method, and the analysis results, compared to example 5, were given in Table 3. The ratio of remaining iridium precious metal of the present invention was 83%, and this remaining ratio was larger than that (64.5%) of the sample supported using a typical impregnation method. The remaining ratio was calculated thus: [precious metal weight of calcined sample]/ [precious metal weight of dried sample] x 100(%). It was understood that, in the present invention, this phenomenon occurred because volatility was suppressed since the precious metal was dissolved in a lattice of a metal oxide of an oxygen storage capacity material.

**Table 3**

| | Rh(0.5)-OSC | | Ir(0.5)-OSC | |
|---|---|---|---|---|
| | Example 4 | Comparative example 3 | Example 5 | Comparative example 4 |
| Dried sample | 4900ppm | 4840ppm | 4800ppm | 4800ppm |
| Calcined sample | 4650ppm | 4500ppm | 4000ppm | 3100ppm |
| Remained ratio(%) | 94.9 | 93.0 | 83.3 | 64.5 |

## Claims

1. A method for preparing a metal oxide containing precious metals, comprising the step of continuously reacting a reaction mixture, comprising (i) water, (ii) a water-soluble precious metal compound, (iii) a water-soluble cerium compound and (iv) at least one water-soluble metal compound selected from the group consisting of a zirconium compound, a scandium compound, an yttrium compound and a lanthanide metal compound other than a cerium compound, at a temperature from 200°C to 700 °C and at a pressure of 180 bar to 550 bar, wherein a molar ratio of precious metal to metal other than the precious metal in a reaction product is in a range from 0.001 to 0.1,
wherein the prepared metal oxide exists in a form of a solid solution, wherein the water-soluble precious metal compound is at least one kind of precious metal compound selected from the group consisting of Rh and Ir.

2. The method according to claim 1, wherein the water-soluble cerium compound is a nitrate, a sulfate, a chloride, an oxalate or a citrate.

3. The method according to claim 1 or 2, wherein the at least one water-soluble metal compound selected from the group consisting of a zirconium compound, a scandium compound, an yttrium compound and a lanthanide metal compound other than a cerium compound is a nitrate , a sulfate, a chloride, an oxalate or a citrate.

4. The method according to one of the preceeding claims, wherein the reaction mixture further comprises an alkaline solution or an acidic solution having a molar ratio of 0.1 to 20 mole per mole of the metal compound before the reaction or during the reaction.

5. The method according to one of the claims 1 to 4, wherein the alkaline solution is ammonia water.

6. The method according to one of the claims 1 to 5, further comprising at least one process of separation, drying or calcinations of synthesized metal oxide.

7. An oxygen storage capacity material comprising the metal oxide which is prepared by the method according to one of claims 1 to 6.

8. A catalyst system comprising the metal oxide which is prepared using the method according to one of claims 1 to 6.

## Patentansprüche

1. Verfahren zur Herstellung eines edelmetallhaltigen Metalloxids, den Schritt des kontinuierlichen Reagierenlassens einer Reaktionsmischung umfassend, welche (i) Wasser, (ii) eine wasserlöslich Edelmetallverbindung, (iii) eine wasserlösliche Cer-Verbindung und (iv) wenigstens eine wasserlösliche Metallverbindung ausgewählt aus der Gruppe bestehend aus einer Zirkonium-Verbindung, einer Scandium-Verbindung, einer Yttrium-Verbindung und einer Lanthanid-Metallverbindung, die keine Cer-Verbindung ist, enthält bei einer Temperatur von 200 °C bis 700 °C und bei einem Druck von 180 bar bis 550 bar, wobei ein Molverhältnis von Edelmetall zu anderen Metallen als diesem Edelmetall in einem Reaktionsprodukt in einem Bereich von 0,001 bis 0,1 liegt, wobei das hergestellte Metalloxid in Form einer Feststofflösung vorliegt und wobei die wasserlöslich Edelmetallverbindung wenigstens eine Art einer Edelmetallverbindung ausgewählt aus der Gruppe bestehend aus Rh und Ir ist.

2. Verfahren nach Anspruch 1, worin die wasserlösliche Cer-Verbindung ein Nitrat, Sulfat, Chlorid, Oxalat oder Zitrat ist.

3. Verfahren nach Anspruch 1 oder 2, worin die wenigstens eine wasserlösliche Metallverbindung ausgewählt ist aus der Gruppe bestehend aus einer Zirkonium-Verbindung, einer Scandium-Verbindung, einer Yttrium-Verbindung und einer Lanthanid-Metallverbindung, die keine Cer-Verbindung ist, und die ein Nitrat, ein Sulfat, ein Chlorid, ein Oxalat oder ein Zitrat ist.

4. Verfahren nach einem der vorstehenden Ansprüche, worin die Reaktionsmischung vor der Reaktion oder während der Reaktion weiterhin eine alkalische Lösung oder eine saure Lösung mit einem Molverhältnis von 0,1 bis 20 Mol pro Mol der Metallverbindung umfasst.

5. Verfahren nach einem der Ansprüche 1 bis 4, worin die alkalische Lösung Ammoniakwasser ist.

6. Verfahren nach einem der Ansprüche 1 bis 5, weiterhin umfassend wenigstens einen Trennprozess, Trockenprozess oder Calcinierungsprozess des synthetisierten Metalloxids.

7. Material mit Sauerstoffspeicherkapazität, umfassend das Metalloxid hergestellt durch das Verfahren nach einem der Ansprüche 1 bis 6.

8. Katalysatorsystem, enthaltend das Metalloxid, welches hergestellt ist mit dem Verfahren nach einem der Ansprüche 1 bis 6.

## Revendications

1. Procédé de préparation d'un oxyde métallique contenant des métaux précieux, comprenant l'étape consistant à faire réagir en continu un mélange réactionnel comprenant (i) de l'eau, (ii) un composé de métaux précieux hydrosoluble, (iii) un composé de cérium hydrosoluble, et (iv) au moins un composé métallique hydrosoluble choisi dans le groupe constitué par un composé de zirconium, un composé de scandium, un composé d'yttrium et un composé métallique de lanthanide autre qu'un composé de cérium, à une température de 200 °C à 700 °C et à une pression de 180 bars à 550 bars, le rapport molaire des métaux précieux aux métaux autres que les métaux précieux dans le produit de réaction se situant dans une gamme de 0,001 à 0,1,
dans lequel l'oxyde métallique préparé existe sous la forme d'une solution solide, et
dans lequel le composé de métaux précieux hydrosoluble est au moins un type de composé de métaux précieux choisi dans le groupe constitué par Rh et Ir.

2. Procédé selon la revendication 1, dans lequel le composé de cérium hydrosoluble est un nitrate, un sulfate, un chlorure, un oxalate ou un citrate.

3. Procédé selon la revendication 1 ou 2, dans lequel l'au moins un composé métallique hydrosoluble choisi dans le groupe constitué par un composé de zirconium, un composé de scandium, un composé d'yttrium et un composé métallique de lanthanide autre qu'un composé de cérium est un nitrate, un sulfate, un chlorure, un oxalate ou un citrate.

4. Procédé selon l'une des revendications précédentes, dans lequel le mélange réactionnel comprend en outre une solution alcaline ou une solution acide ayant une proportion molaire de 0,1 à 20 moles par mole du composé métallique avant la réaction ou pendant la réaction.

5. Procédé selon l'une des revendications 1 à 4, dans lequel la solution alcaline est de l'ammoniaque.

6. Procédé selon l'une des revendications 1 à 5, comprenant en outre au moins un procédé de séparation, de séchage ou de calcination de l'oxyde métallique synthétisé.

7. Matériau à capacité de stockage d'oxygène comprenant l'oxyde métallique qui est préparé par le procédé selon l'une des revendications 1 à 6.

8. Système catalytique comprenant l'oxyde métallique qui est préparé en utilisant le procédé selon l'une des revendications 1 à 6.
